# EUROPÄISCHE PATENTSCHRIFT

(11) **EP 1 242 154 B1**
(45) Veröffentlichungstag und Bekanntmachung des Hinweises auf die Patenterteilung: **06.07.2011**
(21) Anmeldenummer: 00987397.7
(22) Anmeldetag: 13.12.2000
(51) Int. Cl.: B01D 12/00, B01D 9/00, F26B 5/00

(54) **VERFAHREN UND VORRICHTUNG ZUR ABTRENNUNG VON FESTSTOFFEN AUS EINER FLÜSSIGEN PHASE**
METHOD AND DEVICE FOR SEPARATING SOLIDS FROM A LIQUID PHASE
PROCEDE ET DISPOSITIF POUR SEPARER DES MATIERES SOLIDES D'UNE PHASE LIQUIDE

(30) Priorität: 17.12.1999 DE 19961143
(43) Veröffentlichungstag der Anmeldung: 25.09.2002
(60) Teilanmeldung: 10179230.7
(73) Patentinhaber: Ticona GmbH, 65451 Kelsterbach (DE)
(72) Erfinder: HAUBS, Michael, 55545 Bad Kreuznach (DE); WAGENER, Reinhard, 65719 Hofheim (DE)
(74) Vertreter: von Kreisler Selting Werner
(86) Internationale Anmeldenummer: PCT/EP2000/012665
(87) Internationale Veröffentlichungsnummer: WO 2001/043846

(56) Entgegenhaltungen:
- EP-A2- 0 415 258
- EP-A2- 0 415 258
- DE-A- 19 810 565
- US-A- 4 162 215
- US-A- 4 201 871
- US-A- 4 489 571
- US-A- 4 489 571
- US-A- 4 696 114
- US-A- 5 712 412

## Beschreibung

Die vorliegende Erfindung betrifft ein Verfahren und eine Vorrichtung zur Abtrennung von Feststoffen aus einer flüssigen Phase.

Die Abtrennung von Feststoffen aus einer flüssigen Phase ist eine in der Technik häufig gestellte Aufgabe. Beispielhaft sei die Abtrennung von Aluminiumhydroxid-Kristallen von der basischen Mutterlauge genannt. Für die Abtrennung ist es wichtig, den Feststoff möglichst vollständig von der flüssigen Phase zu befreien, ohne daß große Mengen an verdünnter Waschlauge anfallen.

Ein besonderes Trennproblem ist dann gegeben, wenn die flüssige Phase praktisch vollständig (> 99%) vom Feststoff abgetrennt werden muß. Häufig enthält die flüssige Phase nichtflüchtige Komponenten, die abgetrennt werden müssen. In diesem Fall löst eine Trocknung des Feststoffes das Trennproblem nicht. Vielmehr will man den Feststoff waschen, ohne daß verdünnte Waschlaugen anfallen. Dieser Fall liegt bei der Herstellung von einigen Hochleistungspolymeren in hochsiedenden Lösungsmitteln vor. Von besonderer Relevanz ist das erfindungsgemäße Verfahren für solche Polymere, die in einem hochsiedenden Lösemittel unter Bildung von Salzen oder nachträglich zu neutralisierender Säuren oder Basen hergestellt werden. Beispiele für solche Prozesse sind die Herstellung von Polyaramiden aus Diaminen und Disäurechloriden, von Polycarbonaten aus Diphenolen oder Diphenolaten mit Phosgen, von Polysulfonen, Polyethersulfonen oder Polyetherketonen aus Diphenolaten und dihalogenierten aromatischen Kohlenwasserstoffen oder die Herstellung von Polyarylensiloxanen aus Diaryldichlorsilanen mit Diphenolaten. Insbesondere schließt der Begriff Hochleistungspolymere die Polyarylensulfide ein.

Bei der Herstellung von Poly(p-phenylen)sulfid (PPS) muß das Polymer von hochsiedenden N-Methylpyrrolidon (NMP) sowie ungelösten und gelösten Nebenprodukten befreit werden. Der Anteil des Restlösemittels (NMP) im Polymeren soll dabei unter 100 ppm liegen. Das Anfallen von verdünnten NMPhaltigen Waschlaugen würde einen hohen destillativen Aufwand erfordern und muß daher vermieden werden.

Nach dem Stand der Technik kann eine Trennung durch eine Filtration und anschließende Wäsche des Filterkuchens durchgeführt werden. Für eine praktisch vollständige Entfernung der flüssigen Phase vom Feststoff sind aber beträchtliche Volumina der Waschflüssigkeit erforderlich, die kostenintensiv aufgearbeitet werden müssen.

Es ist ebenfalls bekannt, aus der Fest-Flüssig-Mischung das Lösungsmittel, gegebenenfalls bei erhöhter Temperatur, zu verdampfen. Gerade bei hochsiedenden Lösungsmitteln wie NMP ist dies langwierig und aufwendig. Außerdem verbleiben nichtflüchtige Verunreinigungen mit dem Feststoff PPS zurück und müssen in einem weiteren Verfahrensschritt entfernt werden.

Aus wirtschaftlicher Sicht besteht weiterhin ein Interesse, die genannte Trennaufgabe in einem kontinuierlich arbeitenden Trennapparat zu lösen. Die Schrift EP-A-0 415 258 offenbart ein Verfahren gemäß dem Oberbegriff von Anspruch 1.

Die Aufgabe der vorliegenden Erfindung besteht darin, ein Verfahren und eine Vorrichtung zur Abtrennung von Feststoffen aus Fest-Flüssig-Mischungen bereitzustellen, wobei die flüssige Phase praktisch vollständig vom Feststoff abgetrennt wird, ohne daß eine große Menge an verdünnter Waschlauge anfällt.

Die Aufgabe der vorliegenden Erfindung wird durch das Verfahren gemäß Anspruch 1 gelöst.

Der Feststoff wird in der ersten flüssigen Phase in den Fest-Flüssig-Eingang (1) gegeben. Die zweite flüssigen Phase wird in den Flüssigkeitseingang (3) gegeben. Der Feststoff wird möglichst vollständig in der zweiten flüssigen Phase aus dem Fest-Flüssig-Ausgang (4) abgeführt. Die erste flüssige Phase wird möglichst vollständig aus dem Flüssigkeitsausgang (2) abgeführt.

Bei dem erfindungsgemäßen Verfahren werden aus dem Fest-Flüssig-Ausgang (4) mit dem Feststoff in der zweiten flüssigen Phase nur geringe Mengen an erster flüssiger Phase ausgetragen. Beverzugt betragt der Anteil an erster flüssiger Phase, bezogen auf die zweite flüssige Phase im Fest-Flüssig-Ausgang (4), weniger als 50 Gew.-%, weiter bevorzugt weniger als 10 Gew.-% und besonders bevorzugt weniger als 1 Gew.-%.

Bei dem erfindungsgemäßen Verfahren wird die erste flüssige Phase nicht sehr stark mit der zweiten flüssigen Phase verdünnt. Beverzugt betragt der Anteil an zweiter flüssiger Phase, bezogen auf die erste flüssige Phase im Flüssigkeitsausgang (2) weniger als 80 Gew.-%, weiter bevorzugt weniger als 50 Gew.-%, besonders bevorzugt weniger als 30 Gew.-%.

Bei dem erfindungsgemäßen Verfahren werden in der Regel nur geringe Mengen an Feststoff im Flüssigkeitsausgang (2) ausgetragen. Dieser Feststoffanteil beträgt, bezogen auf den in den Fest-Flüssig-Eingang (1) eingetragenen Feststoff bevorzugt weniger als 30 Gew.-%, besonders bevorzugt weniger als 10 Gew.-%.

Der Feststoff durchläuft in dem erfindungsgemäßen Verfahren die Vorrichtung durch Sedimentation unter Schwerkraft. In einer bevorzugten Ausführung der Erfindung wird der Feststoff der Fest-Flüssig-Mischung in einer Vorrichtung mindestens einmal zur Sedimentation gebracht und der sedimentierende Feststoff wird mit einer zweiten flüssigen Phase im Gegenstrom gewaschen.

Bei dem erfindungsgemäßen Verfahren ist bevorzugt die erste flüssige Phase ein organisches Lösungsmittel und die zweite flüssige Phase Wasser. Als organische Lösungsmittel werden zum Beispiel dipolar aprotische Lösungsmittel verwendet, bevorzugt NMP.

Bei dem erfindungsgemäßen Verfahren sind die erste und zweite flüssige Phase bevorzugt mischbar.

Der Feststoff kann aus einer oder mehreren Komponenten bestehen. Bevorzugt ist der Hauptbestandteil des Feststoffs ein Polymer wie ein Polyarylensulfid, ganz besonders bevorzugt PPS.

Das erfindungsgemäße Verfahren kann auch Feststoffgemische von einander trennen, wenn dessen Bestandteile sich unterschiedlich in der ersten und zweiten flüssigen Phase lösen. Bevorzugt ist es, wenn sich der Hauptbestandteil des Feststoffs weder in der ersten noch in der zweiten flüssigen Phase löst. Abzutrennende Nebenbestandteile des Feststoffs oder auch der ersten flüssigen Phase weisen bevorzugt eine gute Löslichkeit in der zweiten flüssigen Phase auf.

In einer besonders bevorzugten Ausführungsform ist ein abzutrennendes und zu reinigendes Polymer, beispielsweise PPS, in der ersten und zweiten flüssigen Phase unter den Bedingungen des erfindungsgemäßen Verfahrens unlöslich, während die zu entfernenden Verunreinigungen, beispielsweise Salz und hochsiedendes Lösemitel, sich in der zweiten flüssigen Phase lösen.

Besonders vorteilhaft bei dem erfindungsgemäßen Verfahren ist die Möglichkeit, die Abtrennung des Feststoffes kontinuierlich auch unter erhöhter Temperatur und erhöhtem Druck durchführen zu können.

Bei dem erfindungsgemäßen Verfahren unterscheidet sich die Dichte des Feststoffs von der Dichte der ersten und zweiten flüssigen Phase.

Der Feststoff wird auf jedem Sedimentationsboden im Sedimentationstrichter sedimentiert und in der Durchströmungszone gewaschen. Dieser Vorgang wird in n Stufen sequentiell wiederholt. Der Sedimentationsboden ist trichterförmig aufgebaut und mündet in einen Abfluß, der den Fest-Flüssig-Ausgang darstellt. Das Kopfteil enthält einen Eingang für die Fest-Flüssig-Mischung, der zum obersten Sedimentationsboden führt. Das Kopfteil enthält weiter einen Ausgang für die Überstandsableitung des obersten Sedimentationsbodens.

Durch die Vorrichtung des erfindungsgemäßen Verfahrens ist es möglich, den Feststoff aus der Mischung so abzutrennen, daß der Anteil der ersten flüssigen Phase, die mit dem Feststoff ausgetragen wird, durch die Erhöhung der Anzahl der Sedimentationsböden verkleinert werden kann.

Die Sedimentationsböden sind übereinander angeordnet. Die Überstandsableitung eines Sedimentationsbodens ist mit der Durchströmungszone des folgenden, darüberliegenden Sedimentationsbodens verbunden. Der Überstand eines Sedimentationsbodens besteht aus einer Mischung der ersten und der zweiten flüssigen Phase. In der Durchströmungszone tritt der Überstand in einer geometrisch genau definierten Anordnung durch den sedimentierenden Feststoff und bewirkt eine zumindest teilweise Verdrängungswäsche des Feststoffs. Auf diese Weise wird der Überstand eines Sedimentationsbodens als Waschflüssigkeit für den darüberliegenden Sedimentationsboden verwendet. Frische Waschflüssigkeit wird der Durchströmungszone des untersten Sedimentationsbodens in Form von reiner zweiter flüssiger Phase durch den Flüssigkeitseingang (3) zugeführt. Während der Feststoff die Vorrichtung des erfindungsgemäßen Verfahrens von oben nach unten durchläuft, fließt die Waschflüssigkeit von unten nach oben. Durch dieses Gegenstromprinzip wird eine außerordentlich effektive Abtrennung der ersten flüssigen Phase vom Feststoff erreicht.

Die geometrische Anordnung der Durchströmungszone wird so gewählt, daß der Feststoff in den einzelnen Sedimentationsböden nicht direkt entgegen der aufströmenden Waschflüssigkeit sedimentiert. Der Durchtritt des Feststoffs in den folgenden Sedimentationsboden wird durch die im Gegenstrom geführte Waschflüssigkeit nicht behindert, da die Waschflüssigkeit in separaten Überstandsableitungen zur Durchströmungszone des nächsten darüberliegenden Sedimentationsbodens geführt wird. Dadurch ist eine weitgehend ungestörte Sedimentation gewährleistet, wodurch auch Feststoffe mit geringer Sedimentationsgeschwindigkeit abgetrennt werden können.

Die Trennwirkung der Vorrichtung des erfindungsgemäßen Verfahrens hängt wesentlich von der Anzahl der Sedimentationsböden ab. Die Trennwirkung läßt sich durch die Anzahl der Sedimentationsböden den jeweiligen Trennaufgaben anpassen. Die Trennwirkung steigt mit der Anzahl der Sedimentationsböden.

Eine bevorzugte Ausgestaltung der Erfindung ist eine Vorrichtung mit n Sedimentationsböden, wobei n eine ganze Zahl von 2 bis 1000 bedeutet.

Eine besonders bevorzugte Ausgestaltung der Erfindung ist eine Vorrichtung, wobei n eine ganze Zahl 3 bis 200 bedeutet.

Eine ganz besonders bevorzugte Ausgestaltung der Erfindung ist eine Vorrichtung, wobei n eine ganze Zahl 4 bis 100 bedeutet.

Häufig ist es vorteilhaft, wenn der oberste Sedimentationsboden oder das Kopfteil der Vorrichtung einen größeren Durchmesser aufweisen als die darunterliegenden Sedimentationsböden. Durch diese Maßnahme wird der Feststoffanteil im Flüssigkeitsausgang (2), der den Überstandsablauf des obersten Sedimentationsbodens bildet, verringert.

Als Fest-Flüssig-Mischungen eignen sich solche Mischungen, bei denen der Feststoff unter Schwerkraft sedimentiert. Die Obergrenze des Feststoffgehaltes ist durch die Fließfähigkeit der Mischung gegeben. Die Vorrichtung kann auch sehr kleine Feststoffanteile abtrennen.

Die Dichte des Feststoffes unterscheidet sich von der Dichte der flüssigen Phase. Die Sedimentationsgeschwindigkeit des Feststoffs in der flüssigen Phase sollte größer als 1 mm/min betragen. Die Sinkgeschwindigkeit eines Feststoffes ist abhängig von dem Dichteunterschied zur flüssigen Phase, der mittleren Korngröße, der Korngrößenverteilung und der Viskosität der flüssigen Phase. Mit der Vorrichtung des erfindungsgemäßen Verfahrens lassen sich Feststoffe mit Korngrößen > 1 µm abtrennen. Die Abtrennung wird verbessert durch steigende Korngröße und einen steigenden Dichteunterschied.

Die Trennleistung der Vorrichtung des erfindungsgemäßen Verfahrens läßt sich durch Änderung der Bauform und Einstellung der Betriebsbedingungen in weiten Grenzen an die jeweilige Trennaufgabe anpassen. In der ersten bevorzugten Ausführungsform läßt sich die Bauform durch die Anzahl der Sedimentationsböden n, Neigung der Sedimentationstrichter, die Geometrie des Sedimentabflusses und der Überstandsableitung sowie die geometrische Gestaltung der Durchströmungszone verändern.

Vorteilhafte Betriebsbedingungen werden durch Einstellung der Zu- und Abflußgeschwindigkeiten von Fest-Flüssig-Mischungen,der Zuflußgeschwindigkeit der zweiten flüssigen Phase oder der Rotationsgeschwindigkeit des Kreuzbalkenrührers erreicht.

Es können auch mehrere Vorrichtungen in Serie verwendet werden. Durch diese Anordnung wird bei gleicher Durchsatzleistung die Trennwirkung verbessert.

Die Erfindung wird anhand einer Zeichnung und eines Beispieles näher erläutert.

### Zeichnung

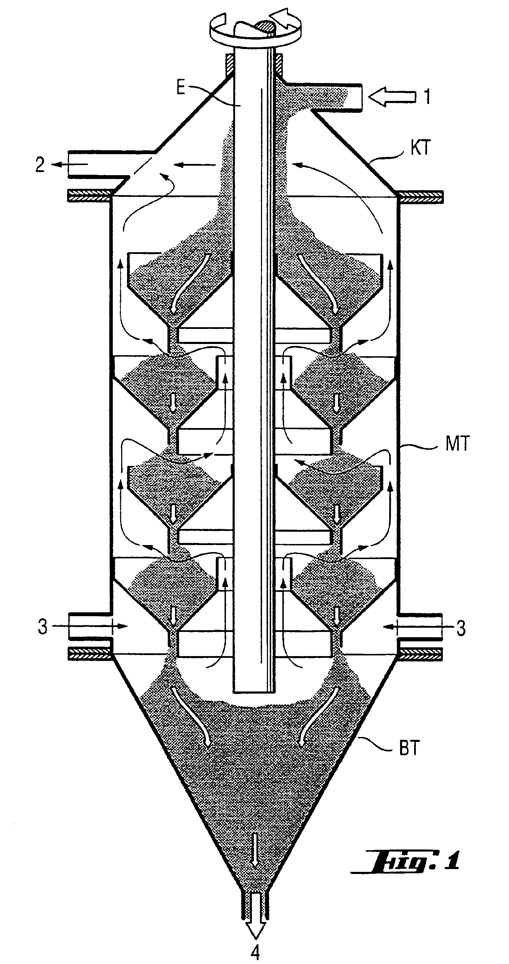

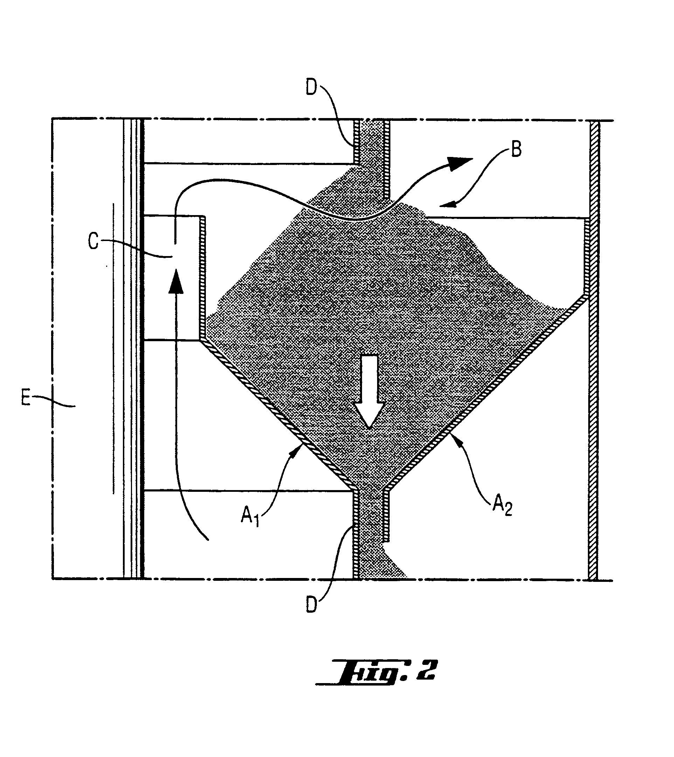

Die Zeichnung besteht aus Figur 1 und Figur 2.
- Figur 1:: zeigt beispielhaft eine erste bevorzugte Ausführungsform der Vorrichtung des erfindungsgemäßen Verfahrens als Sedimentator.
- Figur 2:: zeigt einen Ausschnitt (wiederkehrende Einheit) der Vorrichtung aus Figur 1

Die Vorrichtung gemäß Figur 1 und Figur 2 weist mindestens einen Sedimentationstrichter (A₁,A₂) mit Sedimentabfluß (D), mindestens eine Sedimentationstrichter (A₁,A₂) mit Sedimentabfluß (D), mindestens eine Durchströmungszone (B) und mindestens eine Überstandsableitung (C) auf.

Das Bodenteil (BT) der Vorrichtung gemäß Figur 1 ist trichterförmig aufgebaut und mündet in einen Abfluß, der gleichzeitig den Fest-Flüssig-Ausgang (4) darstellt. Das Kopfteil (KT) enthält einen Eingang für die Fest-Flüssig-Mischung (1). Das Kopfteil (KT) enthält weiter einen Flüssigkeitsausgang (2). Das Mittelteil (MT) enthält n Sedimentationsböden und einen Flüssigkeitseingang (3).

Ein Sedimentationsboden gemäß Figur 2 enthält einen Sedimentationstrichter (A₁,A₂) mit Sedimentabfluß (D), eine Durchströmungszone (B) und eine Überstandsableitung (C). In der Durchströmungszone (B) strömt die Mischung der ersten und zweiten flüssigen Phase aus der Überstandsableitung (C) der darunterliegenden Stufe durch die lockere Feststoffaufschüttung und bewirkt eine zumindest teilweise Verdrängungswäsche. Ein Sedimentationstrichter gemäß Figur 2 besteht aus einem inneren Trichtersegment (A1) und einem äußeren Trichtersegment (A2). Die inneren Trichtersegmente (A1) sind an einer drehbaren inneren Welle (E) befestigt.

### Beispiel 1

Es wurde eine Versuchsvorrichtung gemäß Figur 1 mit 120 mm Durchmesser verwendet. Die Vorrichtung wies 20 Sedimentationsböden auf.

Es wurden 400 g pro Minute einer Mischung von 25 Gew.-% Polyphenylensulfid und 5 Gew.-% festem Kochsalz suspendiert in N-Methylpyrrolidon (5 Gew.-% Wasser enthaltend) bei einer Temperatur von 65 °C in den Fest-Flüssig-Eingang (1) der in Figur 1 dargestellten Vorrichtung gegeben. Gleichzeitig wurden 300 ml pro Minute Wasser mit einer Temperatur von 50 °C in den Flüssigkeitseingang (3) gegeben. Es wurden 300 g pro Minute einer Suspension aus 100 g Polyphenylensulfid in 200 g Wasser aus dem Fest-Flüssig-Ausgang (4) entnommen. Mit dem Polyphenylensulfid in Wasser wurden weniger als 0,5 Gew.-% der eingegebenen Kochsalzmenge ausgetragen. Der NMP-Gehalt der am Fest-Flüssig-Ausgang (4) entnommenen wäßrigen Flüssigphase lag unter 1 %.

Am Flüssigkeitsausgang (2) wurde eine Mischung aus Wasser und NMP ausgetragen, die mehr als 99,5 % der eingetragenen Kochsalzmenge enthielt. Die NMP-Wasser Mischung enthielt über 65 Gew.-% NMP. Es wurde kein meßbarer Austrag von PPS-Feststoff aus dem Flüssigkeitsausgang (2) beobachtet. Zur Isolierung des Polyphenylensulfids wurde die Mischung getrocknet. Die NMP/Wassermischung wurde destilliert und das NMP zurückgewonnen.

Mit diesem Beispiel wurde gezeigt, daß sich Polyphenylensulfid aus einer Mischung mit Kochsalz suspendiert in NMP in einem Sedimentator abtrennen läßt, ohne daß stark verdünnte Waschlaugen anfallen. Das NMP läßt sich ohne Verdampfen großer Wassermengen vollständig durch Destillieren zurückgewinnen. Die Abtrennung von NMP und Kochsalz von PPS liegt deutlich über 99%.

Durch die günstige Rückgewinnung des NMP und geringen Verlust an PPS ist das erfindungsgemäße Verfahren technisch interessant.

## Patentansprüche

1. Verfahren zur Abtrennung von in einer ersten, flüssigen Phase suspendiertem Polymer in einer Vorrichtung, die Durchströmungszonen (B) aufweist, wobei das Polymer in der ersten flüssigen Phase durch Sedimentation unter Schwerkraft und durch Inkontaktbringen mit einer aufwärts strömenden zweiten flüssigen Phase im Gegenstrom gewaschen wird, wobei das suspendierte Polymer von der ersten flüssigen Phase in die zweite flüssige Phase überführt wird und wobei die Vorrichtung
a) mindestens eine Fest-Flüssig Eingang (1) am Kopfteil (kt);
b) mindestets einen Fest-Flüssig-Ausgang (4) am Bodenteil (BT),
c) mindestens einen Flüssigkeitseingang (3) für die Zuführung der zweiten Flüssigkeit am Bodenteil und
d) mindestens einen Flüssigkeitsausgang (2) am Kopfteil enthält,
**dadurch gekennzeichnet, dass** die Vorrichtung eine Reihe von übereinander angeordneten Sedimentationsböden aufweist mit an einer zentrierten Rührwelle (E) angebrachten Rührflügeln (A1), die jeweils zentral in jedem der Böden angeordnet sind, so dass mit innen als inneren Trichtersegmenten jeder Boden einen Sedimentattonatrichter (A₁,A₂) mit einem Sedimentabfluss (b), mindestens eine Durchströmungszone und mindestens eine Überstandsableitung (C) aufweist und die Anordnung der Durchströmungszone und der Überständsableitung so ist, dass der Feststoff in den einzelnen Sedimentationsböden nicht direkt entgegen der aufströmenden Waschflüssigkeit sedimentiert.

2. Verfahren nach Anspruch 1, **dadurch gekennzeichnet, dass** die erste flüssige Phase ein organisches Lösungsmittel als Hauptbestandteil und die zweite flüssige Phase Wasser als Hauptbestandteil enthält.

3. Verfahren nach einem der Ansprüche 1 bis 2, wobei der Anteil an erster flüssiger Phase, bezogen auf die zweite flüssige Phase, im Fest-Flüssig-Ausgang weniger als 50 Gew.-% beträgt.

4. Verfahren nach einem der Ansprüche 1 bis 3, wobei der Anteil an zweiter flüssiger Phase, bezogen auf die erste flüssige Phase, im Flüssigkeits-Ausgang weniger als 80 Gew.% beträgt.

5. Verfahren nach einem der Ansprüche 1 bis 4, wobei mehrere Vorrichtungen in Serie oder parallel geschaltet sind.

6. Verfahren nach einem der Ansprüche 1 bis 5, wobei die erste und die zweite flüssige Phase mischbar sind.

7. Verfahren nach einem der Ansprüche 1 bis 6, wobei sich die Dichte des Polymers von der Dichte der ersten und zweiten flüssigen Phase unterscheidet.

8. Verfahren nach einem der Ansprüche 1 bis 7, **dadurch gekennzeichnet, dass** der Hauptbestandteil des Polymers ein Hochleistungspolymer ist.

9. Verfahren nach Anspruch 8, **dadurch gekennzeichnet, dass** das Hochleistungspolymer ein Polyarylensulfid ist.

10. Verfahren nach Anspruch 9, **dadurch gekennzeichnet, dass** das Polyarylensulfid Polyphenylensulfid ist.

## Claims

1. A process for the separation of a polymer suspended in a first liquid phase in a device having flow zones (6), wherein said polymer in the first liquid phase is washed by sedimentation under gravity and by contacting with a second liquid phase flowing upward in countercurrent, wherein said suspended polymer is transferred from said first liquid phase to said second liquid phase, and wherein said device includes:
a) at least one solid-liquid inlet (1) at the top section (KT);
b) at least one solid-liquid outlet (4) at the bottom section (BT);
c) at least one liquid inlet (3) for supplying the second liquid at the bottom section; and
d) at least one liquid outlet (2) at the top section;
**characterized in that** said device has a number of sedimentation trays arranged above one another with stirrer arms (A1) attached to a central stirrer shaft (E) arranged centrally in each of the trays, so that, with them as inner funnel segments, each tray has a sedimentation funnel (A₁, A₂) with a sedimentation outlet (D), at least one flow zone and at least one supernatant liquid outlet (C), and
the arrangement of the flow zone and of the supernatant liquid outlet is such that the solid in the individual sedimentation trays will not sediment directly against the upward flowing washing liquid.

2. The process according to claim 1, **characterized in that** said first liquid phase contains an organic solvent as a main component, and said second liquid phase contains water as a main component.

3. The process according to either of claims 1 or 2, wherein the proportion of said first liquid phase, based on said second liquid phase, in the solid-liquid outlet is less than 50% by weight.

4. The process according to any of claims 1 to 3, wherein the proportion of said second liquid phase, based on said first liquid phase, in the liquid outlet is less than 80% by weight.

5. The process according to any of claims 1 to 4, wherein several devices are connected in series or in parallel.

6. The process according to any of claims 1 to 5, wherein said first and second liquid phases are miscible.

7. The process according to any of claims 1 to 6, wherein the density of the polymer is different from the densities of said first and second liquid phases.

8. The process according to any of claims 1 to 7, **characterized in that** the main component of said polymer is a high-performance polymer.

9. The process according to claim 8, **characterized in that** said high-performance polymer is a polyarylene sulfide.

10. The process according to claim 9, **characterized in that** said polyarylene sulfide is polyphenylene sulfide.

## Revendications

1. Procédé pour la séparation d'un polymère en suspension dans une première phase liquide dans un dispositif comprenant des zones de flux (6), dans lequel ledit polymère dans la première phase liquide est lavé par sédimentation par gravité et par contact avec une seconde phase liquide s'écoulant vers le haut à contre-courant, dans lequel ledit polymère en suspension est transféré de la première phase liquide à la seconde phase liquide, et dans lequel ledit dispositif comprend :
a) au moins une entrée de solide/liquide (1) dans la partie supérieure (KT);
b) au moins une sortie de solide/liquide (4) dans la partie inférieure (BT) ;
c) au moins une entrée de liquide (3) pour alimenter la seconde liquide dans la partie inférieure ; et
d) au moins une sortie de liquide (2) dans la partie supérieure ;
**caractérisé en ce que** ledit dispositif comprend une pluralité de plaques de sédimentation disposées l'une au-dessus de l'autre avec des pales (A1) attachées à un arbre d'agitateur central (E) disposé au centre dans chacune des plaques, de manière que, avec eux comme segments d'entonnoir intérieurs, chaque plaque comprenne un entonnoir de sédimentation (A₁, A₂) avec une sortie de sédimentation (D), au moins une zone de flux et au moins une sortie de liquide surnageant (C) ; et
l'arrangement de la zone de flux et de la sortie de liquide surnageant est tel que le solide dans les plaques de sédimentation individuelles ne sédimente pas directement à contre-courant du liquide de lavage s'écoulant vers le haut.

2. Procédé selon la revendication 1, **caractérisé en ce que** ladite première phase liquide contient un solvant organique comme composant principal, et ladite seconde phase liquide contient de l'eau comme composant principal.

3. Procédé selon l'une des revendications 1 ou 2, dans lequel le pourcentage de ladite première phase liquide, par rapport à ladite seconde phase liquide, dans la sortie de solide/liquide est moins de 50 pour cent en poids.

4. Procédé selon l'une quelconque des revendications 1 à 3, dans lequel le pourcentage de ladite seconde phase liquide, par rapport à ladite première phase liquide, dans la sortie de liquide est moins de 80 pour cent en poids.

5. Procédé selon l'une quelconque des revendications 1 à 4, dans lequel plusieurs dispositifs sont raccordés en série ou en parallèle.

6. Procédé selon l'une quelconque des revendications 1 à 5, dans lequel lesdites première et seconde phases liquides sont miscibles.

7. Procédé selon l'une quelconque des revendications 1 à 6, dans lequel la densité du polymère est différente des densités desdites première et seconde phases liquides.

8. Procédé selon l'une quelconque des revendications 1 à 7, **caractérisé en ce que** le composant principal dudit polymère est un polymère à haute performance.

9. Procédé selon la revendication 8, **caractérisé en ce que** ledit polymère à haute performance est un sulfure de polyarylène.

10. Procédé selon la revendication 9, **caractérisé en ce que** ledit sulfure de polyarylène est le sulfure de polyphénylène.
